# FASCICULE DE BREVET EUROPEEN

(11) **EP 2 464 307 B1**
(45) Date de publication et mention de la délivrance du brevet: **29.05.2013**
(21) Numéro de dépôt: 10742793.2
(22) Date de dépôt: 28.07.2010
(51) Int. Cl.: A61D 19/02, B01L 3/02, B01L 99/00, G01N 35/10

(54) **PROCÉDÉ ET DISPOSITIF DE VIDAGE D'UN ÉLÉMENT TUBULAIRE ENFERMANT UN FLUIDE**
VERFAHREN UND VORRICHTUNG ZUR ENTLEERUNG EINES FLÜSSIGKEITSHALTIGEN ROHRFÖRMIGEN ELEMENTS
METHOD AND DEVICE FOR DRAINING A TUBULAR ELEMENT CONTAINING A FLUID

(30) Priorité: 11.08.2009 FR 0955617
(43) Date de publication de la demande: 20.06.2012
(73) Titulaire: IMV Technologies, 61300 Saint-Ouen-Sur-Iton (FR)
(72) Inventeur: SCHMITT, Eric, F-53700 Villaines-la-Juhel (FR); VAN KAPPEL, Anne, Linda, F-69008 Lyon (FR)
(74) Mandataire: Regimbeau
(86) Numéro de dépôt international: PCT/EP2010/060969
(87) Numéro de publication internationale: WO 2011/018339

(56) Documents cités:
- DE-A1- 19 947 966
- US-A- 4 000 561
- US-B1- 6 197 261

## Description

### DOMAINE DE L'INVENTION

La présente invention concerne le domaine de la manutention d'éléments tubulaires, appelés «paillettes», enfermant des fluides, notamment des fluides biologiques, des suspensions, cellulaires, etc. Plus particulièrement, la présente invention concerne un procédé et un dispositif de vidage de telles paillettes.

### ETAT DE LA TECHNIQUE

On utilise aujourd'hui de plus en plus de tubes, appelés paillettes, pour la conservation d'échantillons d'une substance particulière, par exemple des prélèvements biologiques d'origine humaine ou animale (par exemple et de façon non exhaustive du sang, de l'urine ou du sperme), mais également des fluides comprenant des suspensions cellulaire, ou encore out autre type de fluide.

De manière classique, les échantillons à conserver, souvent sous forme de liquide, sont recueillis dans un tube, enfermant généralement un bouchon, lequel tube est scellé à chacune de ses extrémités avant d'être congelé, dans l'azote liquide par exemple.

On se référera utilement à la demande de brevet FR 2 651 793 publiée le 15/03/1991 qui liste différents types de paillettes pouvant être utilisées à cette fin, ainsi que des procédés de remplissage de telles paillettes.

La particularité des paillettes à bouchon est que le bouchon permet en particulier de bloquer le liquide lors du processus de remplissage de la paillette par aspiration du liquide à travers la paillette. Ce remplissage se fait à l'aide d'embout, de buses ou autres dispositifs connectés sur les extrémités des paillettes garantissant un remplissage sans souillure de ces extrémités. Après leur remplissage, les paillettes sont soudées par soudure thermique autogène aux deux extrémités afin de préserver l'échantillon de tout contact avec les liquides et gaz cryogéniques ou toute autre source de contamination (biologique et chimique).

Ainsi, l'utilisateur de la paillette (par exemple de manière non limitative centre d'insémination, hôpital, laboratoire d'analyses biologiques) remplit celle-ci de semence animale ou de tout autre prélèvement biologique liquide puis en obture les deux extrémités. Ensuite, cette paillette est congelée en vue d'une utilisation ou d'une analyse future.

Pour récupérer l'échantillon contenu dans la paillette, aux fins d'utilisation ou d'analyse, on sectionne les extrémités du tube au ras des zones non déformées qui sont en deçà des scellements pour former des ouvertures, et on chasse l'échantillon en poussant l'échantillon depuis l'une des ouvertures vers la deuxième ouverture par laquelle l'échantillon est recueilli.

Un tel processus de vidage présente un inconvénient majeur en termes de contamination. En effet, d'une part l'utilisateur ou le milieu ambiant peut être contaminé par l'échantillon, et réciproquement l'échantillon peut être contaminé par l'utilisateur ou le milieu ambiant.

Par ailleurs, les méthodes de vidage des paillettes actuelles ne permettent pas d'avoir des processus de vidage entièrement automatiques, ce qui est de plus en plus problématique, notamment lorsqu'il est nécessaire de vider un grand nombre d'échantillons à des fins d'analyse. Le document DE19947966 divulgue un procédé de vidage selon le préambule de la revendication 1 ainsi qu'un dispositif selon le préambule de la revendication 10.

Un but de la présente invention est donc de proposer un procédé et un dispositif de vidage d'une paillette enfermant un fluide qui permet de résoudre au moins l'un des inconvénients précités.

En particulier un but de la présente invention est de proposer un procédé et un dispositif de vidage d'une paillette enfermant un fluide qui réduit, voire supprime, tout risque de contamination croisée, de l'utilisateur ou le milieu ambiant vers l'échantillon, et de l'échantillon vers l'utilisateur ou le milieu ambiant.

Un autre but de la présente invention est de proposer un procédé et un dispositif de vidage d'une paillette enfermant un fluide permettant d'être automatisé au maximum, notamment pour répondre à des cadences industrielles où plusieurs centaines d'échantillons peuvent être ouverts par jour.

### EXPOSE DE L'INVENTION

A cette fin, on propose un procédé de vidage d'un élément tubulaire enfermant un fluide, ledit élément tubulaire étant au moins fermé à l'une de ses extrémités, le procédé étant caractérisé en ce qu'il comprend les étapes suivantes :
- insertion d'une aiguille à travers les parois de l'élément tubulaire dans une direction transversale à l'axe longitudinal dudit élément tubulaire, ladite aiguille comprenant une extrémité tronquée avec une forme permettant de percer les parois de l'élément tubulaire, l'aiguille étant insérée de manière à traverser l'élément tubulaire de part en part, et étant positionnée pour que l'extrémité tronquée soit située au niveau d'une des parois de manière à former un passage d'évacuation du fluide entre l'extrémité tronquée de l'aiguille et la paroi correspondante de l'élément tubulaire ;
- éjection du fluide contenu dans l'élément tubulaire en insérant un organe de poussée dans l'élément tubulaire depuis une extrémité opposée à l'extrémité fermée, et en déplaçant ledit organe de poussée selon l'axe longitudinal de l'élément tubulaire en direction de l'extrémité fermée pour pousser le fluide à l'extérieur de l'élément tubulaire selon l'axe de l'aiguille à travers le passage d'évacuation du fluide.

Des aspects préférés mais non limitatifs de ce procédé de vidage sont les suivants :
- l'aiguille est insérée à proximité immédiate de l'extrémité fermée de l'élément tubulaire.
- le procédé est utilisé pour le vidage d'un élément tubulaire fermé à chacune de ses extrémités, comprenant en outre une étape d'ouverture de l'élément tubulaire consistant à couper l'une des extrémités dudit élément tubulaire, l'aiguille étant insérée à proximité immédiate de l'extrémité de l'élément tubulaire restant fermée, ladite ouverture étant ensuite utilisée pour insérer l'organe de poussée dans l'élément tubulaire en vue de l'éjection du fluide.
- l'élément tubulaire enferme un bouchon ayant une section correspondant sensiblement à la section intérieure de l'élément tubulaire, de sorte que ledit bouchon sépare un compartiment rempli du fluide d'un compartiment sans fluide, l'ouverture de l'élément tubulaire étant faite du côté du compartiment sans fluide, tandis que l'insertion de l'aiguille est faite du côté du compartiment rempli du fluide.
- le bouchon est comprimé par des moyens de compression pour briser des liaisons chimiques entre le bouchon et les parois internes de l'élément tubulaire, ladite compression étant relâchée avant l'étape d'éjection du fluide.
- un réceptacle est placé sous l'élément tubulaire au niveau du passage d'évacuation du fluide de manière à récupérer le fluide au moment de l'éjection du fluide par l'organe de poussée, l'étape d'éjection du fluide comprenant une étape complémentaire successive à l'insertion de l'organe de poussée, ladite étape complémentaire comprenant le déplacement de l'aiguille en direction du fluide contenu dans le réceptacle jusqu'à ce que l'extrémité de l'aiguille entre en contact avec la surface du fluide contenu dans le réceptacle, ce déplacement de l'aiguille étant immédiatement suivi d'un déplacement de l'aiguille dans un sens opposé.
- l'aiguille est une aiguille tubulaire, l'étape d'éjection du fluide comprenant une étape complémentaire successive à l'insertion de l'organe de poussée, ladite étape complémentaire comprenant l'injection d'un gaz à l'intérieur de l'aiguille tubulaire en direction de l'extrémité tronquée de l'aiguille, de manière à pousser le fluide contenu dans l'aiguille tubulaire jusqu'à l'extrémité tronquée de l'aiguille.
- le procédé est utilisé pour le vidage d'éléments tubulaires enfermant un fluide comprenant des cellules en suspension.
- le procédé est utilisé pour le vidage d'éléments tubulaires enfermant un fluide biologique.

On propose également un dispositif de vidage d'un élément tubulaire enfermant un fluide, ledit élément tubulaire étant au moins fermé à l'une de ses extrémités, caractérisé en ce qu'il comprend :
- des moyens de support de l'élément tubulaire ;
- au moins une aiguille, ladite aiguille comprenant une extrémité tronquée avec une forme permettant de percer les parois de l'élément tubulaire ;
- des moyens de déplacement de l'aiguille, lesdits moyens de déplacement étant agencés par rapport aux moyens de support pour permettre une insertion de l'aiguille à travers les parois de l'élément tubulaire dans une direction transversale à l'axe longitudinal de l'élément tubulaire ;
- des moyens d'éjection du fluide, lesdits moyens d'éjection comprenant un organe de poussée destiné à être inséré dans l'élément tubulaire depuis une extrémité opposée à l'extrémité fermée, et à être déplacé selon l'axe longitudinal de l'élément tubulaire en direction de l'extrémité fermée pour pousser le fluide à l'extérieur de l'élément tubulaire selon l'axe de l'aiguille à travers un passage d'évacuation du fluide destiné à être formé entre l'extrémité tronquée de l'aiguille et la paroi correspondante de l'élément tubulaire.

Des aspects préférés mais non limitatifs de ce dispositif de vidage sont les suivants :
- le dispositif comprend en outre des moyens de convoyage d'au moins un réceptacle pour placer le réceptacle sous l'élément tubulaire au niveau du passage d'évacuation du fluide.
- les moyens de convoyage comprennent en outre une plaque munie d'au moins une ouverture, ladite ouverture étant placée au niveau du passage d'évacuation du fluide, lesdits moyens de convoyage comprenant des moyens pour maintenir les bords du réceptacle du côté de son ouverture à proximité immédiate d'une des surfaces de la plaque.
- le dispositif comprend une pluralité de réceptacles prévus pour recevoir le fluide issus de différentes paillettes à vider, les moyens de convoyage comprenant des moyens pour maintenir les bords des réceptacles du côté de leur ouverture à proximité immédiate d'une des surfaces de la plaque.
- lequel l'extrémité tronquée de l'aiguille a une forme biseautée.
- l'aiguille est une aiguille tubulaire.
- le dispositif comprend en outre des moyens d'injection de gaz à l'intérieur de l'aiguille tubulaire en direction de l'extrémité tronquée de l'aiguille.
- le dispositif comprend en outre des moyens pour couper l'une des extrémités de l'élément tubulaire.
- l'organe de poussée comprend une extrémité de poussée ayant une section sensiblement égale à la section intérieure de l'élément tubulaire.
- le dispositif est destiné à être utilisé pour vider un élément tubulaire enfermant un bouchon ayant une section correspondant sensiblement à la section intérieure de l'élément tubulaire, de sorte que ledit bouchon sépare un compartiment rempli du fluide d'un compartiment sans fluide, dans lequel l'organe de poussée des moyens d'éjection comprend des moyens pour coopérer avec ledit bouchon de sorte que ledit bouchon forme une tête de piston.
- le dispositif est destiné à être utilisé pour vider un élément tubulaire enfermant un bouchon ayant une section correspondant sensiblement à la section intérieure de l'élément tubulaire, de sorte que ledit bouchon sépare un compartiment rempli du fluide d'un compartiment sans fluide, le dispositif comprenant en outre des moyens de compression pour comprimer le bouchon de l'élément tubulaire.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- la figure 1 est une représentation schématique du dispositif de vidage de paillette selon l'invention ;
- les figures 2a et 2b sont des représentations schématiques illustratives de plusieurs positionnements d'insertion de l'aiguille dans la paillette, qui ne sont pas adaptés pour le vidage selon l'invention ;
- les figures 3a, 3b et 3c sont des représentations schématiques illustratives de plusieurs positionnements d'insertion de l'aiguille dans la paillette, qui sont adaptés pour le vidage selon l'invention ;
- la figure 4 est une représentation tridimensionnelle du dispositif de vidage selon l'invention ;
- la figure 5 est une autre représentation tridimensionnelle du dispositif de vidage selon l'invention.

### DESCRIPTION DETAILLEE DE L'INVENTION

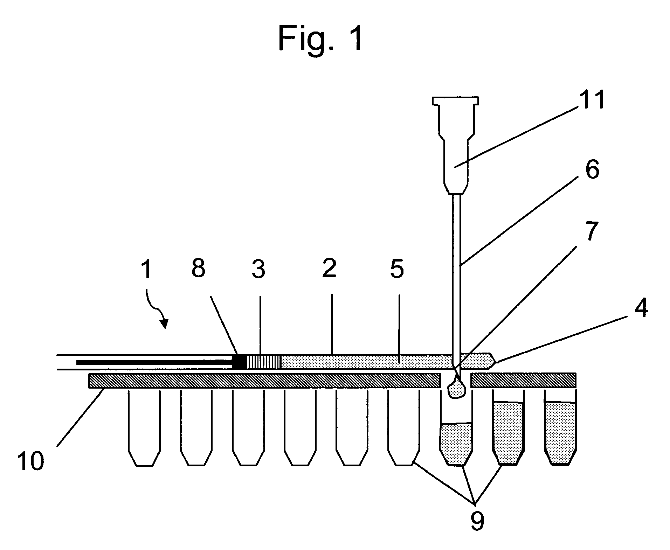

Comme on peut le voir partiellement illustré à la figure 1, la paillette 1 se présente généralement sous la forme d'un élément tubulaire 1 enfermant un fluide particulier, la paillette étant prévue pour protéger ledit fluide des effets du milieu extérieur, en vue de la conservation de ce fluide.

Comme indiqué plus haut, la paillette 1 peut avoir des structures différentes. En particulier, elle peut par exemple être formée d'un élément tubulaire à simple paroi, mais également à double paroi comme cela est présenté dans la demande de brevet français publiée sous la référence FR 2 846 128 le 23 avril 2004. Dans le reste de la description, lorsque l'on se référera aux parois 2 de l'élément tubulaire 1, on entendra tout type de structure, à simple paroi, double parois, voire plus.

La paillette 1 peut également être dotée d'un élément 3 formant bouchon, ayant une forme sensiblement cylindrique d'une section correspondant à la section intérieure de la structure tubulaire de la paillette 1. La présence ou non de ce bouchon dépend essentiellement des méthodes utilisées pour remplir la paillette 1. Il est à noté que le principe de vidage exposé ici peut être utilisé pour tout type de paillette 1 de forme sensiblement tubulaire, incluant ou non un bouchon 3.

Le bouchon 3 utilisé dans les paillettes 1 peut être de plusieurs types. Il peut s'agir par exemple d'un bouchon dit « coton », fabriqué en polyester viscose et comprenant une poudre à base de polymère qui se gélifie et permet au bouchon d'adhérer aux parois 2 intérieures du tube 1, et ainsi rester en position. Il peut également s'agir d'un bouchon en matière plastique formé d'une membrane hydrophobe.

Lorsqu'un bouchon est utilisé, une fois la paillette remplie du fluide à conserver, ce bouchon sépare un compartiment rempli du fluide d'un compartiment sans fluide, généralement rempli de gaz, comme de l'air.

Par ailleurs, une fois que le fluide est injecté dans l'élément tubulaire 1, les extrémités 4 de la paillette sont refermées, par soudage thermique par exemple, pour que le fluide soit correctement isolé du milieu extérieur.

Le fluide 5 contenu dans la paillette 1, à des fins de conservation de longue durée notamment, peut être de tout type, en fonction des utilisations ultérieures souhaitées. La paillette 1 peut par exemple contenir un fluide 5 comprenant des suspensions cellulaires, par exemple à titre non limitatif des échantillons de cellules humaines ou animales, ou des cellules végétales, voire de cellules de synthèse. Le fluide 5 conservé dans la paillette 1 peut également être un fluide biologique, c'est-à-dire un fluide provenant d'échantillons biologiques, notamment d'origine humaine ou animale, tel que par exemple le sang, l'urine, le sperme, etc.

Le principe de vidage de paillette selon l'invention consiste à confiner au maximum l'évacuation du fluide 5 de la paillette 1 vers le réceptacle 9 destiné à recueillir ce fluide 5, afin de réduire, voire de supprimer totalement, les risques de contamination croisée.

Pour ce faire, on utilise une aiguille 6 agencée pour venir transpercer les parois 2 de la paillette 1 de manière transversale par rapport à l'axe longitudinal de la paillette 1, de préférence dans une direction normale à l'axe longitudinal de la paillette 1. L'aiguille 6 est insérée dans la paillette 1 de manière à la traverser de part en part.

L'aiguille 6 a une forme longitudinale avec une extrémité 7 tronquée. Par extrémité tronquée, on entend que la forme cylindrique de l'aiguille 6 est taillée à son extrémité, la surface imaginaire formée par les bords de l'extrémité de l'aiguille ne correspondant ainsi pas à la section de la forme cylindrique, mais par exemple à une surface inclinée, qui peut être plane ou courbée. De manière préférée, l'extrémité tronquée 7 de l'aiguille 6 forme un biseau. L'aiguille peut être pleine ou creuse, par exemple cylindrique pleine ou tubulaire creuse.

On peut par exemple utiliser une aiguille hypodermique du commerce, ce qui est particulièrement avantageux en termes de réduction de coûts dans la mise en oeuvre du procédé de vidage proposé puisque l'aiguille à utiliser peut être tout à fait standard. Dans ce cas, on peut par exemple utiliser une aiguille 6 doté d'un embout 11 normalisé, permettant une mise en place plus facile de l'aiguille 6 sur le dispositif de déplacement de l'aiguille correspondant.

L'insertion de l'aiguille 6 à travers la paillette 1 est faite de manière à ménager un passage entre l'intérieur et l'extérieur de la paillette 1, dit passage d'évacuation, ce passage étant formé entre l'aiguille en tant que telle et la paroi 2 traversée en dernier par l'aiguille 6 (c'est-à-dire la paroi inférieure de la paillette 1). Pour ce faire, l'aiguille 6 est positionnée de manière à ce que l'extrémité tronquée 7 de l'aiguille 6 soit située au niveau de ladite dernière paroi 2 traversée par l'aiguille 6. Ainsi, l'extrémité tronquée 7 est positionnée à cheval à travers la paroi inférieure 2 de la paillette 1.

Lorsque l'aiguille 6 est cylindrique pleine, on insère l'aiguille 6 de manière à lui faire traverser les parois 2 de la paillette 1, puis on déplace légèrement ladite aiguille 6 dans le sens opposé, c'est-à-dire dans le sens de l'extraction de l'aiguille 6, de manière à ménager un passage entre l'extrémité tronquée 7 de l'aiguille 6 et la paroi 2 inférieure.

Si l'aiguille 6 est tubulaire, c'est-à-dire creuse, alors il n'est pas nécessaire de déplacer l'aiguille dans le sens de l'extraction puisqu'un passage entre l'intérieur et l'extérieur de la paillette 1 est naturellement formé grâce au conduit intérieur de l'aiguille 6.

Le positionnement de l'aiguille 6 est en outre contrôlé pour ne ménager qu'un unique passage d'évacuation. En effet, il convient en particulier qu'il n'y ait pas de passage au niveau de la première paroi pour que le fluide 5 puisse être évacué dans une seule direction. A cette fin, l'aiguille 6 est positionnée pour que l'extrémité tronquée ne soit pas située au niveau de la première paroi 2 traversée (généralement la paroi 2 supérieure). Ainsi, au niveau de la paroi traversée en premier, la forme cylindrique de l'aiguille 6 vient coopérer étroitement avec la paroi 2 de la paillette 1, cette coopération étant notamment due à l'élasticité du matériau formant la paillette 1, empêchant tout passage de fluide 5 vers l'extérieur.

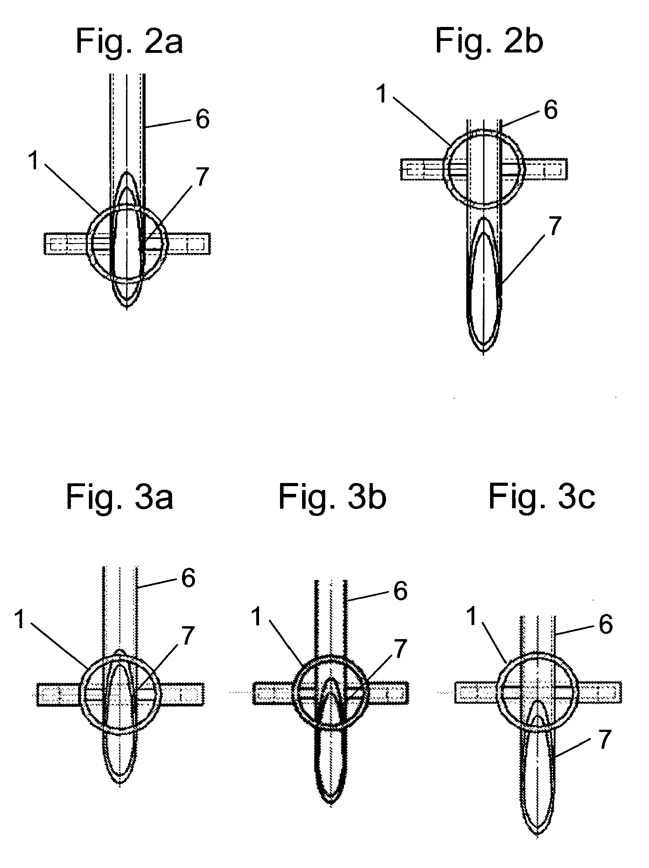

Les figures 2a, 2b, et 3a, 3b et 3c illustrent différents positionnements de l'aiguille 6 à travers la paillette 1, notamment en regard du positionnement de l'extrémité tronquée 7 de l'aiguille 6.

Le positionnement illustré à la figure 2a montre que l'aiguille 6 n'est pas assez enfoncée dans la paillette 1 puisque l'extrémité tronquée 7 chevauche à la fois la paroi supérieure et la paroi inférieure de la paillette 1, ce qui crée donc deux passages d'évacuation du fluide. A l'inverse, le positionnement illustré à la figure 2b montre que l'aiguille 6 est trop enfoncée dans la paillette 1 puisque l'extrémité tronquée 7 ne chevauche plus aucune paroi, et il n'y a donc aucun passage d'évacuation du fluide.

C'est en effet un positionnement intermédiaire tel qu'illustré aux figures 3a, 3b, et 3c qui est recherché, pour que l'extrémité tronquée 7 de l'aiguille 6 soit uniquement à cheval sur la paroi inférieure de la paillette 1, formant ainsi un unique passage d'évacuation du fluide. L'ouverture du passage sera plus ou moins importante en fonction de la position d'insertion de l'aiguille 6, la taille de cette ouverture allant en diminuant de la figure 3a à la figure 3c.

Le passage qui est ainsi créé entre l'aiguille 6 et la paroi 2 va permettre une éjection du fluide 5 contenu en dehors de la paillette 1 à travers ledit passage d'évacuation, l'écoulement du fluide 5 vers l'extérieur se faisant suivant l'axe de l'aiguille 6 ce qui est particulièrement avantageux puisque cela permet de contrôler plus finement l'éjection du fluide 5, et donc de réduire les éclaboussures qui sont autant de risques de contamination.

L'éjection du fluide 5 contenu dans la paillette 1 à travers le passage d'évacuation est effectuée en poussant ledit fluide 5 vers ce passage d'évacuation, les différences de pression et l'effet de la gravité permettant ensuite au fluide 5 de sortir de la paillette le long de l'aiguille 6.

Pour pousser le fluide 5, on prévoit un organe de poussée 8 destiné à être inséré à l'intérieur de l'élément tubulaire 1 formant la paillette 1 depuis l'une de ses extrémités, qui aura au préalable été ouverte par tout dispositif approprié. Cet organe de poussée 8 agit pour amener le fluide 5 en direction du passage d'évacuation ménagé au niveau de l'aiguille 6. Du fait que l'autre extrémité de la paillette 1 n'a pas été ouverte, le fluide 5 contenu dans la paillette 1 est éjecté vers l'extérieur à travers le passage d'évacuation qui est le seul passage vers l'extérieur de la paillette. Afin d'évacuer le maximum de fluide 5 par le passage d'évacuation, l'aiguille 6 est insérée de préférence au plus près de l'extrémité 4 de la paillette 1 restant fermée, à proximité immédiate de cette extrémité 4. Ainsi la distance entre le point d'insertion de l'aiguille 6 et l'extrémité 4 sera par exemple de quelques millimètres (mm), de préférence inférieure à 10 mm.

De manière préférée, l'organe de poussée 8 a une extrémité ayant une section sensiblement égale à la section intérieure de la paillette 1. Ainsi, un tel organe de poussée 8 peut venir pousser directement le fluide 5 contenu dans la paillette 1, à la manière d'une tête de piston, que celle-ci soit dotée d'un bouchon 3 ou non. Dans le cas où la paillette 1 n'a pas de bouchon 3, il convient de nettoyer ou changer l'extrémité de l'organe de poussée 8 en contact avec le fluide 5 entre chaque paillette 1 pour éviter que le fluide 5 d'une paillette 1 ne vienne contaminer le fluide d'une paillette vidée ultérieurement.

Dans le cas où la paillette 1 à vider est dotée d'un bouchon 3, alors l'insertion de l'organe de poussée 8 dans la paillette 1 se fait à l'extrémité du côté du compartiment intérieur sans fluide, l'insertion de l'aiguille étant faite quant à elle du côté du compartiment intérieur de la paillette 1 enfermant le fluide 5. Par ailleurs, dans ce cas, il n'est pas nécessaire que l'organe de poussée 8 ait une extrémité avec une section correspondant à la section intérieure de la paillette 1. Il suffit en effet que l'extrémité de l'organe de poussée 8 soit adaptée pour coopérer avec le bouchon 3 de sorte que le bouchon 3 serve de tête de piston poussant le fluide 5 vers l'extérieur de la paillette 1.

Le déplacement de l'organe de poussée 8 pour entrer dans la paillette 1 et pousser le fluide 5, ou pour sortir de la paillette 1 une fois le vidage de la paillette 1 terminé, peut être effectué de manière manuelle mais sera de préférence effectué de manière automatisée, avec par l'exemple l'usage d'un mécanisme motorisé, vérin hydroélectrique, etc.

Un autre critère important pour réduire la contamination croisée, notamment la contamination par le fluide extrait de la paillette vers le milieu extérieur (utilisateur, autres échantillons prélevés antérieurement, milieu ambiant, etc.) est d'isoler au maximum les réceptacles 9 qui sont destinés à collecter les différents fluides.

Pour ce faire, on utilise un système de convoyage de ces réceptacles 9 qui est doté d'un dispositif 10 qui vient obstruer les ouvertures des différents réceptacles 9, au moins partiellement, sauf au niveau du réceptacle destiné à recevoir le fluide 5 qui est en train d'être vidé de la paillette 1.

Ce dispositif peut par exemple comprendre une portion de plaque 10 munie d'au moins une ouverture, ladite ouverture étant placée au niveau du passage d'évacuation du fluide.

Par ailleurs, les moyens de convoyage sont adaptés pour maintenir les bords du réceptacle 9 du côté de son ouverture à proximité immédiate d'une des surfaces de la plaque. Les moyens de convoyages sont aussi prévus pour maintenir également les bords des autres réceptacles 9 du côté de leur ouverture à proximité immédiate d'une des surfaces de la plaque 10, que ces réceptacles 9 soient vides ou déjà remplis de fluide issus de paillettes vidées antérieurement. Cette configuration permet d'isoler facilement l'intérieur des réceptacles ce qui réduit les risques de contamination, notamment la contamination entre réceptacles.

Le processus de vidage de paillette 1 proposé se déroule donc généralement selon la succession d'étapes suivante :
- insertion de l'aiguille 6 à travers les parois de la paillette 1 pour la traverser de part en part, et positionnement de l'aiguille 6 pour que son extrémité tronquée 7 forme un passage d'évacuation avec la paroi 2 inférieure de la paillette 1 ;
- ouverture de l'extrémité de la paillette 1 située à l'opposé du point d'insertion de l'aiguille 6 (cette ouverture pouvant être faite avant l'insertion en tant que telle de l'aiguille 6) ;
- insertion de l'organe de poussée 8 dans la paillette 1 par son côté ouvert, et déplacement de cet organe de poussée 8 le long de la paillette 1 pour pousser le fluide 5 contenu dans la paillette 1 en direction du passage d'évacuation - cela entraîne l'éjection du fluide 5 de la paillette 1 vers le réceptacle 9 placé en dessous de ladite paillette 1, au niveau du passage d'évacuation ;
- retrait de l'organe de poussée 8, et déplacement de la paillette 1 et du réceptacle 9 pour mettre une nouvelle paillette en regard d'un nouveau réceptacle au niveau des moyens de déplacement de l'aiguille (qui est également changée) et de l'ouverture de la plaque 10 de protection des moyens de convoyage (de manière alternative, ce sont les moyens de déplacement de l'aiguille et la plaque 10 de protection qui sont déplacés pour mettre une nouvelle paillette en regard d'un nouveau réceptacle).

L'éjection du fluide 5 peut éventuellement être optimisée par des étapes complémentaires intervenant à la fin du processus d'éjection par déplacement de l'organe de poussée 8.

En effet, il peut par exemple être prévu d'injecter un gaz à l'intérieur de l'aiguille tubulaire 6 en direction de l'extrémité tronquée de l'aiguille 6, de manière à pousser le fluide 5 contenu dans l'aiguille tubulaire 6 jusqu'à l'extrémité tronquée de l'aiguille.

Une autre étape complémentaire, pouvant venir seule ou en complément de celle évoqué ci-dessus, et réalisée à la fin de l'étape d'éjection par la poussée de l'organe de poussée 8, consiste à déplacer l'aiguille 6 en direction du fluide 5 contenu dans le réceptacle 9 jusqu'à ce que l'extrémité de l'aiguille 6 entre en contact avec la surface du fluide (appelé ménisque) contenu dans le réceptacle 9, ce déplacement de l'aiguille 6 étant immédiatement suivi d'un déplacement de l'aiguille 6 dans un sens opposé. Cela permet de retirer la dernière goutte restée retenue à l'extrémité de l'aiguille 6 à la fin de la poussée par l'organe de poussée 8 ; en effet, lorsque l'aiguille est retirée du réceptacle 9, la goutte reste cette fois retenue au fluide contenu dans le réceptacle 9.

Par ailleurs, lorsque la paillette 1 à vider comprend un bouchon 3, ce bouchon 3 adhère en général fortement aux parois intérieures de la paillette 1. Cette adhérence est souvent due à des liaisons chimiques particulières qui ont pu se former entre le bouchon 3 et les parois internes de la paillette 1. Dans ce cas, on peut prévoir de comprimer la paillette 1 au niveau du bouchon 3, avant de débuter l'évacuation du fluide 5 en tant que telle, afin de briser les liaisons chimiques, et pouvoir ensuite déplacer le bouchon librement, ou sans trop de contraintes. La compression est relâchée avant l'étape d'éjection du fluide 5. A ces fins de compression, on peut par exemple utiliser des moyens de compression spécifiques, la compression pouvant aussi être faite manuellement.

Le processus de vidage de paillette décrit ci-dessus peut être fait aussi bien de manière manuelle que de façon totalement automatisée ce qui est particulièrement avantageux, notamment lorsqu'il convient de vider un grand nombre de paillettes, et/ou que les risques de contamination croisées des fluides sont élevés.

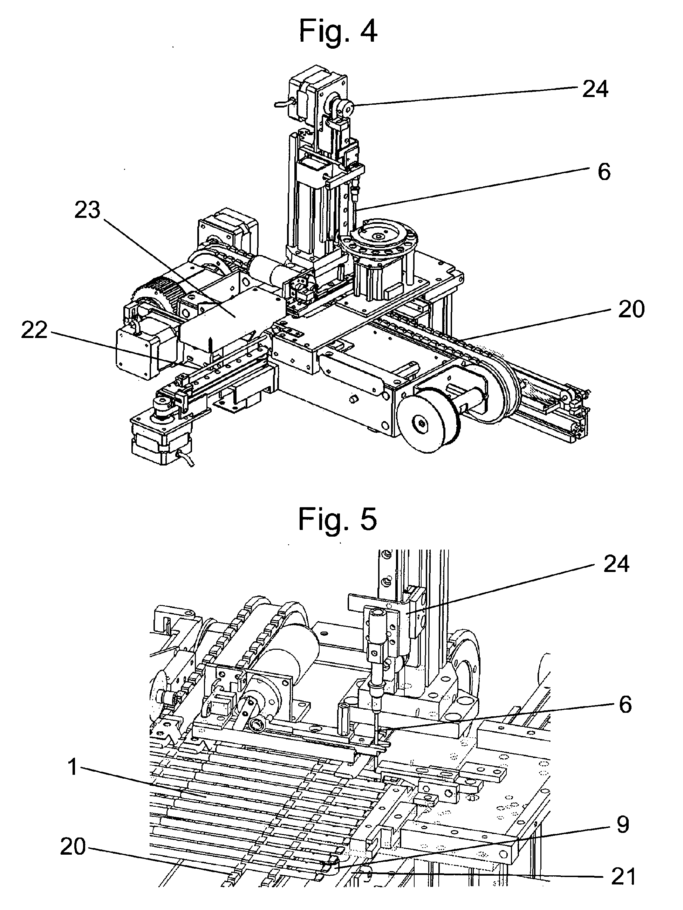

Les figures 4 et 5 illustrent un mode de réalisation particulier d'un système de vidage mettant en oeuvre le procédé de vidage de paillettes décrit plus haut.

Ce système de vidage est totalement automatique, comprenant en particulier :
- un convoyeur 20 pour le déplacement des paillettes 1 ;
- un convoyeur 21 pour le déplacement des réceptacles 9 (la plaque de protection 10 n'est pas représentée sur les schémas des figures 4 et 5) ;
- un dispositif motorisé 22 de déplacement de l'organe de poussée 8 ;
- un poste de coupe 23 placé en amont du dispositif motorisé 22 de déplacement, pour découper l'une des extrémités des paillettes avant qu'elles ne soient vidées ;
- un dispositif motorisé 24 de déplacement de l'aiguille 6.

Le lecteur aura compris que de nombreuses modifications peuvent être apportées sans sortir matériellement des nouveaux enseignements et des avantages décrits ici. Par conséquent, toutes les modifications de ce type sont destinées à être incorporées à l'intérieur de la portée du procédé et du dispositif de vidage de paillettes selon l'invention.

## Revendications

1. Procédé de vidage d'un élément tubulaire (1) enfermant un fluide (5), ledit élément tubulaire (1) étant au moins fermé à l'une de ses extrémités (4), le procédé comprenant l'étape suivante :
- insertion d'une aiguille (6) à travers les parois (2) de l'élément tubulaire (1) dans une direction transversale à l'axe longitudinal dudit élément tubulaire (1), ladite aiguille (6) comprenant une extrémité tronquée (7) avec une forme permettant de percer les parois (2) de l'élément tubulaire (1), le procédé étant **caractérisé en ce que** l'aiguille (6) est insérée de manière à traverser l'élément tubulaire (1) de part en part, et étant positionnée pour que l'extrémité tronquée (7) soit située au niveau d'une des parois (2) de manière à former un passage d'évacuation du fluide (5) entre l'extrémité tronquée (7) de l'aiguille (6) et la paroi (2) correspondante de l'élément tubulaire (1) ; et **en ce que** le procédé comprend l'étape suivante:
- éjection du fluide (5) contenu dans l'élément tubulaire (1) en insérant un organe de poussée (8) dans l'élément tubulaire (1) depuis une extrémité opposée à l'extrémité fermée, et en déplaçant ledit organe de poussée (8) selon l'axe longitudinal de l'élément tubulaire (1) en direction de l'extrémité fermée pour pousser le fluide (5) à l'extérieur de l'élément tubulaire (1) selon l'axe de l'aiguille (6) à travers le passage d'évacuation du fluide.

2. Procédé selon la revendication 1, dans lequel l'aiguille (6) est insérée à proximité immédiate de l'extrémité (4) fermée de l'élément tubulaire (1).

3. Procédé selon la revendication 1 pour le vidage d'un élément tubulaire (1) fermé à chacune de ses extrémités (4), comprenant en outre une étape d'ouverture de l'élément tubulaire (1) consistant à couper l'une des extrémités (4) dudit élément tubulaire (1), l'aiguille (6) étant insérée à proximité immédiate de l'extrémité (4) de l'élément tubulaire (1) restant fermée, ladite ouverture étant ensuite utilisée pour insérer l'organe de poussée (8) dans l'élément tubulaire (1) en vue de l'éjection du fluide (5).

4. Procédé selon la revendication 3, dans lequel l'élément tubulaire (1) enferme un bouchon (3) ayant une section correspondant sensiblement à la section intérieure de l'élément tubulaire (1), de sorte que ledit bouchon (3) sépare un compartiment rempli du fluide (5) d'un compartiment sans fluide, l'ouverture de l'élément tubulaire (1) étant faite du côté du compartiment sans fluide, tandis que l'insertion de l'aiguille (6) est faite du côté du compartiment rempli du fluide (5).

5. Procédé selon la revendication 4, dans lequel le bouchon (3) est comprimé par des moyens de compression pour briser des liaisons chimiques entre le bouchon (3) et les parois internes de l'élément tubulaire (1), ladite compression étant relâchée avant l'étape d'éjection du fluide (5).

6. Procédé selon l'une quelconque des revendications 1 à 5, dans lequel un réceptacle (9) est placé sous l'élément tubulaire (1) au niveau du passage d'évacuation du fluide de manière à récupérer le fluide (5) au moment de l'éjection du fluide (5) par l'organe de poussée (8), l'étape d'éjection du fluide (5) comprenant une étape complémentaire successive à l'insertion de l'organe de poussée (8), ladite étape complémentaire comprenant le déplacement de l'aiguille (6) en direction du fluide (5) contenu dans le réceptacle (9) jusqu'à ce que l'extrémité de l'aiguille (6) entre en contact avec la surface du fluide (5) contenu dans le réceptacle (9), ce déplacement de l'aiguille (6) étant immédiatement suivi d'un déplacement de l'aiguille (6) dans un sens opposé.

7. Procédé selon l'une quelconque des revendications 1 à 6, dans lequel l'aiguille (6) est une aiguille (6) tubulaire, l'étape d'éjection du fluide (5) comprenant une étape complémentaire successive à l'insertion de l'organe de poussée (8), ladite étape complémentaire comprenant l'injection d'un gaz à l'intérieur de l'aiguille (6) tubulaire en direction de l'extrémité tronquée (7) de l'aiguille (6), de manière à pousser le fluide (5) contenu dans l'aiguille (6) tubulaire jusqu'à l'extrémité tronquée (7) de l'aiguille (6).

8. Procédé selon l'une quelconque des revendications 1 à 7 utilisé pour le vidage d'éléments tubulaires enfermant un fluide comprenant des cellules en suspension.

9. Procédé selon l'une quelconque des revendications 1 à 8 utilisé pour le vidage d'éléments tubulaires enfermant un fluide biologique.

10. Dispositif de vidage d'un élément tubulaire (1) enfermant un fluide (5), ledit élément tubulaire (1) étant au moins fermé à l'une de ses extrémités (4), le dipositif comprenant :
- des moyens de support de l'élément tubulaire (1) ;
- au moins une aiguille (6), ladite aiguille (6) comprenant une extrémité tronquée (7) avec une forme permettant de percer les parois (2) de l'élément tubulaire (1) ;
- des moyens de déplacement de l'aiguille (6), lesdits moyens de déplacement étant agencés par rapport aux moyens de support pour permettre une insertion de l'aiguille (6) à travers les parois (2) de l'élément tubulaire (1) dans une direction transversale à l'axe longitudinal de l'élément tubulaire (1) ; le dispositif étant **caractérisé par**
- des moyens d'éjection du fluide (5), lesdits moyens d'éjection comprenant un organe de poussée (8) destiné à être inséré dans l'élément tubulaire (1) depuis une extrémité opposée à l'extrémité fermée, et à être déplacé selon l'axe longitudinal de l'élément tubulaire (1) en direction de l'extrémité fermée pour pousser le fluide (5) à l'extérieur de l'élément tubulaire (1) selon l'axe de l'aiguille (6) à travers un passage d'évacuation du fluide destiné à être formé entre l'extrémité tronquée (7) de l'aiguille (6) et la paroi (2) correspondante de l'élément tubulaire (1).

11. Dispositif selon la revendication 10, comprenant en outre des moyens de convoyage d'au moins un réceptacle (9) pour placer le réceptacle (9) sous l'élément tubulaire (1) au niveau du passage d'évacuation du fluide.

12. Dispositif selon la revendication 11, dans lequel les moyens de convoyage comprennent en outre une plaque (10) munie d'au moins une ouverture, ladite ouverture étant placée au niveau du passage d'évacuation du fluide, lesdits moyens de convoyage comprenant des moyens pour maintenir les bords du réceptacle (9) du côté de son ouverture à proximité immédiate d'une des surfaces de la plaque (10).

13. Dispositif selon la revendication 12, comprenant une pluralité de réceptacles (9) prévus pour recevoir le fluide (5) issus de différentes paillettes (1) à vider, les moyens de convoyage comprenant des moyens pour maintenir les bords des réceptacles (9) du côté de leur ouverture à proximité immédiate d'une des surfaces de la plaque (10).

14. Dispositif selon l'une quelconque des revendications 10 à 12, dans lequel l'extrémité tronquée (7) de l'aiguille (6) a une forme biseautée.

15. Dispositif selon l'une quelconque des revendications 10 à 13, dans lequel l'aiguille (6) est une aiguille (6) tubulaire.

16. Dispositif selon la revendication 15, comprenant en outre des moyens d'injection de gaz à l'intérieur de l'aiguille (6) tubulaire en direction de l'extrémité tronquée (7) de l'aiguille (6).

17. Dispositif selon l'une quelconque des revendications 10 à 16, comprenant en outre des moyens pour couper l'une des extrémités (4) de l'élément tubulaire (1).

18. Dispositif selon l'une quelconque des revendications 10 à 17, dans lequel l'organe de poussée (8) comprend une extrémité de poussée ayant une section sensiblement égale à la section intérieure de l'élément tubulaire (1).

19. Dispositif selon l'une quelconque des revendications 10 à 17, destiné à être utilisé pour vider un élément tubulaire (1) enfermant un bouchon (3) ayant une section correspondant sensiblement à la section intérieure de l'élément tubulaire (1), de sorte que ledit bouchon (3) sépare un compartiment rempli du fluide (5) d'un compartiment sans fluide, dans lequel l'organe de poussée (8) des moyens d'éjection comprend des moyens pour coopérer avec ledit bouchon (3) de sorte que ledit bouchon (3) forme une tête de piston.

20. Dispositif selon l'une quelconque des revendications 10 à 18, destiné à être utilisé pour vider un élément tubulaire (1) enfermant un bouchon (3) ayant une section correspondant sensiblement à la section intérieure de l'élément tubulaire (1), de sorte que ledit bouchon (3) sépare un compartiment rempli du fluide (5) d'un compartiment sans fluide, le dispositif comprenant en outre des moyens de compression pour comprimer le bouchon (3) de l'élément tubulaire (1).

## Patentansprüche

1. Verfahren zum Entleeren eines rohrförmigen Elements (1), das ein Fluid (5) umschließt, wobei das rohrförmige Element (1) an mindestens einem seiner Enden (4) geschlossen ist, wobei das Verfahren den folgenden Schritt umfasst:
- Einführen einer Nadel (6) durch die Wände (2) des rohrförmigen Elements (1) hindurch in einer Richtung quer zu der Längsachse des rohrförmigen Elements (1), wobei die Nadel (6) ein angeschnittenes Ende (7) mit einer Form umfasst, die es ermöglicht, die Wände (2) des rohrförmigen Elements (1) zu durchstechen, wobei das Verfahren **dadurch gekennzeichnet ist, dass** die Nadel (6) derart eingeführt wird, dass sie das rohrförmige Element (1) von der einen Seite zur anderen durchquert und so platziert wird, dass sich das angeschnittene Ende (7) im Bereich einer der Wände (2) befindet, derart, dass ein Durchlass zum Ablassen des Fluids (5) zwischen dem angeschnittenen Ende (7) der Nadel (6) und der entsprechenden Wand (2) des rohrförmigen Elements (1) gebildet wird,
und dass das Verfahren den folgenden Schritt umfasst:
- Ausstoßen des in dem rohrförmigen Element (1) enthaltenen Fluids (5), indem ein Schuborgan (8) in das rohrförmige Element (1) von einem Ende aus, das dem geschlossenen Ende entgegengesetzt ist, eingeführt wird, und indem das Schuborgan (8) entlang der Längsachse des rohrförmigen Elements (1) in Richtung des geschlossenen Endes bewegt wird, um das Fluid (5) aus dem rohrförmigen Element (1) entlang der Achse der Nadel (6) durch den Durchlass zum Ablassen des Fluids hindurch hinaus zu schieben.

2. Verfahren nach Anspruch 1, wobei die Nadel (6) in unmittelbarer Nähe des geschlossenen Endes (4) des rohrförmigen Elements (1) eingeführt wird.

3. Verfahren nach Anspruch 1 zum Entleeren eines rohrförmigen Elements (1), das an jedem seiner Enden (4) geschlossen ist, das ferner einen Schritt des Öffnens des rohrförmigen Elements (1) umfasst, der darin besteht, eines der Enden (4) des rohrförmigen Elements (1) abzuschneiden, wobei die Nadel (6) in unmittelbarer Nähe desjenigen Endes (4) des rohrförmigen Elements (1) eingeführt wird, das geschlossen bleibt, wobei die Öffnung anschließend verwendet wird, um das Schuborgan (8) in das rohrförmige Element (1) hinein zu schieben, um das Fluid (5) auszustoßen.

4. Verfahren nach Anspruch 3, wobei das rohrförmige Element (1) einen Stopfen (3) mit einem Querschnitt umschließt, der im Wesentlichen dem Innenquerschnitt des rohrförmigen Elements (1) entspricht, so dass der Stopfen (3) einen mit dem Fluid (5) gefüllten Raum von einem fluidlosen Raum trennt, wobei das Öffnen des rohrförmigen Elements (1) auf der Seite des fluidlosen Raums erfolgt, während das Einführen der Nadel (6) auf der Seite des mit dem Fluid (5) gefüllten Raums erfolgt.

5. Verfahren nach Anspruch 4, wobei der Stopfen (3) durch Kompressionsmittel komprimiert wird, um die chemischen Verbindungen zwischen dem Stopfen (3) und den Innenwänden des rohrförmigen Elements (1) zu brechen, wobei die Kompression vor dem Schritt des Ausstoßens des Fluids (5) gelöst wird.

6. Verfahren nach einem der Ansprüche 1 bis 5, wobei ein Auffangbehälter (9) unter dem rohrförmigen Element (1) im Bereich des Durchlasses zum Ablassen des Fluids angeordnet wird, derart, dass er das Fluid (5) zu dem Zeitpunkt des Ausstoßens des Fluids (5) durch das Schuborgan (8) auffängt, wobei der Schritt des Ausstoßens des Fluids (5) einen zusätzlichen Schritt nach dem Einführen des Schuborgans (8) umfasst, wobei der zusätzliche Schritt das Bewegen der Nadel (6) in Richtung des in dem Auffangbehälter (9) enthaltenen Fluids (5) umfasst, bis das Ende der Nadel (6) mit der Oberfläche des in dem Auffangbehälter (9) enthaltenen Fluids (5) in Berührung kommt, wobei diese Bewegung der Nadel (6) unmittelbar von einer Bewegung der Nadel (6) in einer entgegengesetzten Richtung gefolgt ist.

7. Verfahren nach einem der Ansprüche 1 bis 6, wobei die Nadel (6) eine rohrförmige Nadel (6) ist, wobei der Schritt des Ausstoßens des Fluids (5) einen zusätzlichen Schritt nach dem Einführen des Schuborgans (8) umfasst, wobei der zusätzliche Schritt das Einführen eines Gases in das Innere der rohrförmigen Nadel (6) in Richtung des angeschnittenen Endes (7) der Nadel (6) umfasst, derart, dass das in der rohrförmigen Nadel (6) enthaltene Fluid (5) bis zum angeschnittenen Ende (7) der Nadel (6) geschoben wird.

8. Verfahren nach einem der Ansprüche 1 bis 7, das verwendet wird zum Entleeren rohrförmiger Elemente, die ein Fluid umschließen, das Zellen in Suspension enthält.

9. Verfahren nach einem der Ansprüche 1 bis 8, das verwendet wird zum Entleeren rohrförmiger Elemente, die ein biologisches Fluid umschließen.

10. Vorrichtung zum Entleeren eines rohrförmigen Elements (1), das ein Fluid (5) umschließt, wobei das rohrförmige Element (1) an mindestens einem seiner Enden (4) geschlossen ist, wobei die Vorrichtung Folgendes umfasst:
- Mittel zum Tragen des rohrförmigen Elements (1);
- zumindest eine Nadel (6), wobei die Nadel (6) ein angeschnittenes Ende (7) mit einer Form umfasst, die es ermöglicht, die Wände (2) des rohrförmigen Elements (1) zu durchstechen;
- Mittel zum Bewegen der Nadel (6), wobei die Bewegungsmittel relativ zu den Tragemitteln so angeordnet sind, dass sie ein Einführen der Nadel (6) durch die Wände (2) des rohrförmigen Elements (1) hindurch in einer Richtung quer zu der Längsachse des rohrförmigen Elements (1) ermöglichen;
wobei die Vorrichtung **gekennzeichnet ist durch**
- Mittel zum Ausstoßen des Fluids (5), wobei die Ausstoßmittel ein Schuborgan (8) umfassen, das dafür vorgesehen ist, in das rohrförmige Element (1) von einem Ende aus, das dem geschlossenen Ende entgegengesetzt ist, eingeführt zu werden und entlang der Längsachse des rohrförmigen Elements (1) in Richtung des geschlossenen Endes verschoben zu werden, um das Fluid (5) aus dem rohrförmigen Element (1) entlang der Achse der Nadel (6) durch einen Durchlass zum Ablassen des Fluids hindurch hinaus zu schieben, wobei der Durchlass zwischen dem angeschnittenen Ende (7) der Nadel (6) und der entsprechenden Wand (2) des rohrförmigen Elements (1) zu bilden ist.

11. Vorrichtung nach Anspruch 10, die ferner Mittel zum Transport mindestens eines Auffangbehälters (9) umfasst, um den Auffangbehälter (9) unter dem rohrförmigen Element (1) im Bereich des Durchlasses zum Ablassen des Fluids zu platzieren.

12. Vorrichtung nach Anspruch 11, wobei die Transportmittel ferner eine Platte (10) umfassen, die mit mindestens einer Öffnung versehen ist, wobei die Öffnung im Bereich des Durchlasses zum Ablassen des Fluids platziert ist, wobei die Transportmittel Mittel umfassen, um die Ränder des Auffangbehälters (9) auf der Seite seiner Öffnung in unmittelbarer Nähe einer der Oberflächen der Platte (10) zu halten.

13. Vorrichtung nach Anspruch 12, die eine Vielzahl von Auffangbehältern (9) umfasst, die für die Aufnahme des Fluids (5) vorgesehen sind, das aus verschiedenen zu entleerenden Plättchen (1) stammt, wobei die Transportmittel Mittel umfassen, um die Ränder der Auffangbehälter (9) auf der Seite ihrer Öffnung in unmittelbarer Nähe einer der Oberflächen der Platte (10) zu halten.

14. Vorrichtung nach einem der Ansprüche 10 bis 12, wobei das angeschnittene Ende (7) der Nadel (6) eine abgeschrägte Form hat.

15. Vorrichtung nach einem der Ansprüche 10 bis 13, wobei die Nadel (6) eine rohrförmige Nadel (6) ist.

16. Vorrichtung nach Anspruch 15, das ferner Mittel umfasst zum Einführen von Gas in das Innere der rohrförmigen Nadel (6) in Richtung des angeschnittenen Endes (7) der Nadel (6).

17. Vorrichtung nach einem der Ansprüche 10 bis 16, das ferner Mittel umfasst, um eines der Enden (4) des rohrförmigen Elements (1) abzuschneiden.

18. Vorrichtung nach einem der Ansprüche 10 bis 17, wobei das Schuborgan (8) ein Schubende umfasst, das einen Querschnitt hat, der im Wesentlichen gleich dem Innenquerschnitt des rohrförmigen Elements (1) ist.

19. Vorrichtung nach einem der Ansprüche 10 bis 17, die zum Entleeren eines rohrförmigen Elements (1) vorgesehen ist, das einen Stopfen (3) mit einem Querschnitt umschließt, der im Wesentlichen dem Innenquerschnitt des rohrförmigen Elements (1) entspricht, so dass der Stopfen (3) einen mit dem Fluid (5) gefüllten Raum von einem fluidlosen Raum trennt, wobei das Schuborgan (8) der Ausstoßmittel Mittel für das Zusammenwirken mit dem Stopfen (3) umfasst, so dass der Stopfen (3) einen Kolbenteller bildet.

20. Vorrichtung nach einem der Ansprüche 10 bis 18, die zum Entleeren eines rohrförmigen Elements (1) vorgesehen ist, das einen Stopfen (3) mit einem Querschnitt umschließt, der im Wesentlichen dem Innenquerschnitt des rohrförmigen Elements (1) entspricht, so dass der Stopfen (3) einen mit dem Fluid (5) gefüllten Raum von einem fluidlosen Raum trennt, wobei die Vorrichtung ferner Kompressionsmittel umfasst, um den Stopfen (3) des rohrförmigen Elements (1) zu komprimieren.

## Claims

1. Method of draining a tubular element (1) containing a fluid (5), said tubular element (1) being at least closed at one of its ends (4), the method comprising the following step:
- insertion of a needle (6) through the walls (2) of the tubular element (1), in a direction transverse to the longitudinal axis of said tubular element (1), said needle (6) comprising a truncated end (7) with a shape making it possible to pierce the walls (2) of the tubular element (1), the method being **characterised in that** the needle (6) is inserted so as to pass right through the tubular element (1), and being positioned so that the truncated end (7) is situated level with one of the walls (2) so as to form a passage for discharging the fluid (5) between the truncated end (7) of the needle (6) and the corresponding wall (2) of the tubular element (1);
and **in that** the method comprises the following step:
- ejection of the fluid (5) contained in the tubular element (1) by inserting a push member (8) into the tubular element (1) from an end opposite to the closed end, and moving said push member (8) along the longitudinal axis of the tubular element (1) in the direction of the closed end in order to push the fluid (5) outside the tubular element (1) along the axis of the needle (6) through the fluid-discharge passage.

2. Method according to claim 1, in which the needle (6) is inserted in the immediate vicinity of the closed end (4) of the tubular element (1).

3. Method according to claim 1 for draining a tubular element (1) closed at each of its ends (4), further comprising a step of opening the tubular element (1) consisting of cutting one of the ends (4) of said tubular element (1), the needle (6) being inserted in the immediate vicinity of the end (4) of the tubular element (1) remaining closed, said opening then being used for inserting the push member (8) in the tubular element (1) with a view to the ejection of the fluid (5).

4. Method according to claim 3, in which the tubular element (1) contains a plug (3) having a cross section corresponding substantially to the inside cross section of the tubular element (1), so that said plug (3) separates a compartment filled with the fluid (5) from a fluid-free compartment, the opening of the tubular element (1) being done on the same side as the fluid-free compartment while the insertion of the needle (6) is done on the side of the compartment filled with fluid (5).

5. Method according to claim 4, in which the plug (3) is compressed by compression means in order to break the chemical bonds between the plug (3) and the internal walls of the tubular element (1), said compression being released before the step of injection of the fluid (5).

6. Method according to any one of claims 1 to 5, in which a receptacle (9) is placed under the tubular element (1) level with the fluid-discharge passage so as to recover the fluid (5) at the moment of ejection of the fluid (5) by the push member (8), the step of ejecting the fluid (5) comprising a supplementary step following on from the insertion of the push member (8), said supplementary step comprising the movement of the needle (6) in the direction of the fluid (5) contained in the receptacle (9) until the end of the needle (6) comes into contact with the surface of the fluid (5) contained in the receptacle (9), this movement of the needle (6) being immediately followed by a movement of the needle (6) in an opposite direction.

7. Method according to any one of claims 1 to 6, in which the needle (6) is a tubular needle (6), the step of ejecting the fluid (5) comprising a supplementary step following on from the insertion of the push member (8), said supplementary step comprising the injection of a gas inside the tubular needle (6) in the direction of the truncated end (7) of the needle (6) so as to push the fluid (5) contained in the tubular needle (6) as far as the truncated end (7) of the needle (6).

8. Method according to one of claims 1 to 7 used for draining tubular elements containing a fluid comprising cells in suspension.

9. Method according to any one of claims 1 to 8 used for draining tubular elements containing a biological fluid.

10. Device for draining a tubular element (1) containing a fluid (5), said tubular element (1) being at least closed at one of its ends (4), the device comprising:
- support means for supporting the tubular element (1);
- at least one needle (6), said needle (6) comprising a truncated end (7) with a shape making it possible to pierce the walls (2) of the tubular element (1);
- movement means for moving the needle (6), said movement means being arranged with respect to the support means to allow insertion of the needle (6) through the walls (2) of the tubular element (1) in a direction transverse to the longitudinal axis of the tubular element (1);
the device being **characterised by**
- ejection means for ejecting the fluid (5), said ejection means comprising a push member (8) intended to be inserted in the tubular element (1) from an end opposite to the closed end, and to be moved along the longitudinal axis of the tubular element (1) in the direction of the closed end in order to push the fluid (5) outside the tubular element (1) along the axis of the needle (6) through a passage for discharging the fluid intended to be formed between the truncated end (7) of the needle (6) and the corresponding wall (2) of the tubular element (1).

11. Device according to claim 10, further comprising conveying means for conveying at least one receptacle (9) for placing the receptacle (9) under the tubular element (1) level with the fluid-discharge passage.

12. Device according to claim 11, in which the conveying means further comprise a plate (10) provided with at least one opening, said opening being placed level with the fluid-discharge passage, said conveying means comprising means for holding the edges of the receptacle (9) at its opening in the immediate vicinity of one of the surfaces of the plate (10).

13. Device according to claim 12, comprising a plurality of receptacles (9) provided for receiving the fluid (5) issuing from various pallets (1) to be drained, the conveying means comprising means for holding the edges of the receptacles (9) at their opening in the immediate vicinity of one of the surfaces of the plate (10).

14. Device according to any one of claims 10 to 12, in which the truncated end (7) of the needle (6) has a bevelled shape.

15. Device according to any one of claims 10 to 13, in which the needle (6) is a tubular needle (6).

16. Device according to claim 15, further comprising injection means for injecting gas inside the tubular needle (6) in the direction of the truncated end (7) of the needle (6).

17. Device according to any one of claims 10 to 16, further comprising means for cutting one of the ends (4) of the tubular element (1).

18. Device according to any one of claims 10 to 17, in which the push member (8) comprises a push end having a cross section substantially equal to the inside cross section of the tubular element (1).

19. Device according to any one of claims 10 to 17, intended to be used for draining a tubular element (1) containing a plug (3) having a cross section corresponding substantially to the inside cross section of the tubular element (1), so that said plug (3) separates a compartment filled with fluid (5) from a fluid-free compartment, in which the push member (8) of the ejection means comprises means for cooperating with said plug (3) so that said plug (3) forms a piston head.

20. Device according to any one of claims 10 to 18, intended to be used for draining a tubular element (1) containing a plug (3) having a cross section corresponding substantially to the inside cross section of the tubular element (1), so that said plug (3) separates a compartment filled with fluid (5) from a fluid-free compartment, the device further comprising compression means for compressing the plug (3) of the tubular element (1).
